# EUROPEAN PATENT SPECIFICATION

(11) **EP 2 093 080 B1**
(45) Date of publication and mention of the grant of the patent: **21.12.2011**
(21) Application number: 07831842.5
(22) Date of filing: 14.11.2007
(51) Int. Cl.: B60C 19/00, B60C 5/00, B29D 30/08

(54) **PNEUMATIC TIRE AND METHOD OF PRODUCING THE SAME**
DRUCKLUFTREIFEN UND VERFAHREN ZUR HERSTELLUNG DESSELBEN
PNEU ET PROCÉDÉ DE PRODUCTION DE CELUI-CI

(30) Priority: 06.12.2006 JP 2006329816
(43) Date of publication of application: 26.08.2009
(73) Proprietor: Bridgestone Corporation, Tokyo 104-8340 (JP)
(72) Inventor: ISHIHARA, Taiga c/o BRIDGESTONE CORPORATION, Kodaira-shi Tokyo 187-8531 (JP)
(74) Representative: Whalley, Kevin
(86) International application number: PCT/JP2007/072112
(87) International publication number: WO 2008/069010

(56) References cited:
- JP-A- 02 127 101
- JP-A- 2004 082 387
- JP-A- 2005 271 695
- JP-A- 2006 151 328

## Description

The present invention relates to a pneumatic tire capable of reducing the noise within an automobile cabin, and a method of producing such a pneumatic tire. More specifically, the present invention contemplates to provide a technology that is capable of reducing cavity resonance noise generated by the vibration of air filled in a tire air chamber defined by the pneumatic tire and an applied rim on which the tire is air-tightly assembled.

### BACKGROUND ART

In a pneumatic tire assembled onto a rim, during the running state of a vehicle, the tire tread portion is caused to vibrate as it collides with unevenness of the road surface, thereby generating vibration of air filled in the interior of the tire. Such vibration of air often causes a cavity resonance depending upon the inner shape of the tire, etc., which, in turn, generates a so-called road noise within the automobile cabin.

In the case of a pneumatic tire for passenger cars, this sort of cavity resonance has a resonance frequency which, in many instances, exists within a range from 180 Hz to 300 Hz. When the resonance noise is transmitted into the automobile cabin, unlike noise in other frequency ranges, the resonance noise exhibits a sharp and high peak value. Thus, the road noise is sensed by passengers in the automobile cabin as harsh noise.

In view of such a problem, there has been proposed a technology for suppressing a cavity resonance by fixedly attaching to the inner surface of the pneumatic tire a noise-insulating sheet of a strip shape, which is made of a spongy material. Reference may be had, for example, to Patent Document 1: Japanese Patent Application Laid-open Publication No. 2003-048407.

### DISCLOSURE OF THE INVENTION

### (Task to be Solved by the Invention)

However, in the case of a conventional technology wherein a spongy material is fixedly adhered to the inner surface of the pneumatic tire within the tire cavity, by using a synthetic rubber-type adhesive or other type of adhesive, or a double-faced adhesive tape, since the spongy material is a porous material and has a number of projections and depressions in its surface of adhesion to the tire, there is a problem that an adhesion strength of the spongy material to the tire cannot be sufficiently increased. Moreover, when the spongy material is separated from the tire inner surface, there arises a further problem that the separated spongy material is rubbed against the tire during its rotation, thereby heating the tire and degrading the durability of the tire.

The present invention contemplates to solve the above-mentioned problems of the prior art, and it is an object of the present invention to provide an improved pneumatic tire that is capable of sufficiently increasing the fixation strength of the porous layer to the tire inner surface, and effectively reducing a cavity resonance noise generated in an air chamber defined by the tire and the rim.

### (Means for Solving the Task)

According to the present invention, there is provided a pneumatic tire comprising a porous layer that is fixedly attached to a tire inner surface through an impregnation layer, wherein the impregnation layer is impregnated in the porous layer over part of a thickness of the porous layer.

Preferably, the porous layer is fixedly attached to the tire inner surface over a width across a tire equatorial plane, which corresponds to 30% to 100% of the ground-contact tread width. In this instance, the porous layer may be arranged either to extend continuously over an entire circumference of the tire, or as being divided into segments that are spaced from each other in the circumferential direction. It is also preferred that the porous layer has a non- impregnated portion with a thickness that is within a range from 0.5 mm to 50 mm.

Here, the term "ground-contact tread width" refers to the maximum linear distance in the tire axial direction, in the contact face of the tire with a flat plate, with the tire being assembled to an approved rim, inflated with a designated air pressure, placed stationarily on the flat plate, and applied with a load corresponding to the designated weight.

As used herein, the term "approved rim" refers to a rim specified by the standards identified below corresponding to the tire size, the term "designated air pressure" refers to an inflation pressure designated by these standards corresponding to the maximum load capacity, and the term "maximum load capacity" refers to the maximum weight permitted for loading the tire according to these standards. It is noted that, within the context of the present invention, air for inflating the tire may be replaced by inert gas, such as nitrogen gas, etc.

The term "standards" refers to industrial standards effective in geographical regions where the tires are produced or used, and includes "The Year Book" of The Tire and Rim Association Inc., for the United States, "The Standards Manual" of The European Tyre and Rim Technical Organization for European countries, and "JATMA Year Book" of Japan Automobile Tyre Manufacturers Association for Japan.

Here, the porous layer may be comprised of a foamed body made from a rubber or synthetic resin, having a continuous cell structure or independent cell structure, or a non-woven cloth made from synthetic fibers, vegetable fibers or animal fibers. When the porous layer is comprised of a non-woven cloth, it is preferred that it has a density within a range from 0.005 to 0.2, and an average fiber diameter within a range from 0.1 µm to 200 µm, more preferably within a range from 1.0 µm to 50 µm.

In the pneumatic tire of the structure described above, it is preferred that the impregnation layer is interposed between the porous layer and the tire inner surface over an entire width of the porous layer. The impregnation layer may be suitably selected from various materials. Depending upon compatibility of the impregnation layer and the material for the tire inner surface, the impregnation layer may be joined to the tire inner surface with, or without an adhesive layer interposed therebetween.

As regards the adhesion of the porous layer to the tire inner surface through the impregnation layer, depending upon selection of the required thickness of the impregnation layer and/or porous layer, there is not only the case where the impregnation layer is partly impregnated in the porous layer, but also a case where the impregnation layer is entirely impregnated in the porous layer.

Here, when the impregnation layer is only partly impregnated in the porous layer, the impregnation layer is firmly attached to the tire inner surface with, or without the adhesive layer therebetween. Furthermore, the porous layer is firmly attached to the impregnation layer which has penetrated into it, by the adhesion and/or physical engagement with each otter.

On the other hand, when the impregnation layer is entirely impregnated in the porous layer, the porous layer has an appearance wherein its unevenness is filed by the impregnation layer, and is firmly attached to the tire inner surface optionally with an adhesive layer therebetween. In this instance, the adhesion between the porous layer and the impregnation layer is essentially the same as what has been described above.

The impregnation layer may be comprised of a butyl-rubber or other rubber, which is of the same type as a general inner liner rubber, or of a suitable thermoplastic resin. Furthermore, the impregnation layer may also be comprised of an inner liner rubber that forms the tire inner surface.

Such thermoplastic resin may include, for example, a single layer thermoplastic resin wherein a soft resin is dispersed in a matrix resin, or a multi-layer thermoplastic resin including a layer wherein a soft resin is dispersed in the matrix resin. The resin forming the matrix, in turn, may include such resins having an adequate mechanical strength, such as polyamide resin, polyvinylidene chloride resin, polyester resin, ethylene-vinyl alcohol copolymer resin, besides thermoplastic urethane-based elastomer.

One type of these raw materials may be used alone, or two or more types may be used in combination. Also, the resin film produced by using these raw materials may be a single layer film, or a laminated film including two or more layers.

Among such raw materials, ethylene-vinyl alcohol copolymer resin is preferred in that it has an extremely low air permeability and is thus highly excellent in gas barrier property. Furthermore, thermoplastic urethane-based elastomer is excellent in water resistance and adhesion with rubber, so that it is preferably used as an outer layer portion in a laminated film.

The above-mentioned ethylene-vinyl alcohol copolymer resin preferably comprises a modified ethylene-vinyl alcohol copolymer resin that is obtained by modifying an ethylene-vinyl alcohol copolymer with an epoxy compound. Such modification serves to significantly lower the modulus of elasticity of the unmodified ethylene-vinyl alcohol copolymer, thereby allowing improvement in the breaking strength or the degree of crack formation upon bonding deformation of the tire.

The soft resin dispersed in the matrix resin preferably comprises a resin having a functional group that reacts with hydroxyl group, and Young's modulus of not higher than 500 MPa. The content of the soft resin in the thermoplastic resin matrix is preferably 10 to 30 mass%, with respect to 100 parts by mass of the thermoplastic resin. In the dispersed state, the soft resin has an average particle diameter that is preferably not larger than 2 µm.

The thermoplastic resin, in which such soft resin is dispersed, preferably comprises a modified ethylene-vinyl alcohol copolymer resin that is obtained by modifying 100 parts by mass of ethylene-vinyl alcohol copolymer having an ethylene content of 25 to 50 mol%, with 1 to 50 parts by mass of an epoxy compound.

The above-mentioned modified ethylene-vinyl alcohol copolymer has a lower modulus of elasticity as compared to unmodified ethylene-vinyl alcohol copolymer. The modulus of elasticity can be further lowered by dispersing the soft resin having the above-mentioned properties and a functional group that reacts with hydroxyl group. Thus, the resin compound wherein a soft resin is dispersed in a matrix comprising the modified ethylene-vinyl alcohol copolymer has a significantly low modulus of elasticity and exhibits an improved breaking strength and minimized crack formation upon bonding deformation of the tire.

When the porous layer comprises a foamed body, the impregnation layer is preferably impregnated in the foamed body with an impregnation depth that is within a range from 20 µm to 5 mm. On the other hand, when the porous layer comprises a non-woven cloth, the impregnation layer is preferably impregnated in the non-woven cloth with an impregnation depth that exceeds an average diameter of fibers of the non-woven cloth.

In the above-described pneumatic tire, the impregnation layer may be made of a raw material, which can be impregnated into the raw material for the porous layer by applying heat and pressure. In this instance, it is preferred that the raw material for an impregnation layer is impregnated into the raw material for a porous layer, and a resultant porous layer is fixedly attached to a tire inner surface, under the heat and pressure during a vulcanizing process with respect to a green tire.

### (Effects of the Invention)

In the pneumatic tire according to the present invention, since the porous layer is fixedly attached to a tire inner surface through an impregnation layer, with the unevenness in the surface of the porous layer filled by the material of the impregnation layer, the impregnation layer serves to fixedly attach the porous layer to the tire inner surface with a higher adhesion force, as compared to the prior art that uses only a synthetic rubber-based adhesive.

At the same time, upon occurrence of a cavity resonance, the porous layer by itself effectively contributes to the reduction of the cavity resonance noise by causing the vibration energy of the air filled in the tire air chamber to be dissipated within the porous layer as a heat energy.

Here, when the porous layer is fixedly attached to the tire inner surface over a width that corresponds to 30% to 100% of the ground-contact width of the tread, it is possible to achieve an excellent noise reduction effect In other words, if the attaching width is less than 30%, it would be difficult to sufficiently achieve the desired noise reduction effect On the other hand, if the attaching width exceeds 100%, dissipation of heat due to occurrence of strain in the belt end regions would be impeded to degrade the durability of the tire.

Also, when the porous layer is fixedly attached to the tire inner surface over the entire circumference of the tire, the noise reduction effect with respect to the cavity resonance noise can be further improved without degrading tire uniformity, etc.

When the porous layer has a non-impregnated portion which is free from the impregnation layer, and of which the thickness is within a range from 0.5 mm to 50 mm, it is possible to achieve an excellent noise reduction effect while preventing crack formation, tearing and separation of the porous layer. In other words, if the thickness is less than 0.5 mm, the noise reduction effect tends to be insufficient. On the other hand, if the thickness exceeds 50 mm, due to the increased mass, the deformation caused by centrifugal force upon a high speed rotation becomes large to raise the risk of separation, etc.

The porous layer constructed as described above effectively achieves the desired noise reduction effect, whether it is made of a foamed body or a non-woven cloth.

When the porous layer is made of a non-woven cloth having a density within a range from 0.005 to 0.2, in addition to the thickness of the non-impregnated portion (0.5 mm to 50 mm) as described above, the desired noise reduction effect can be achieved without a significant increase in the mass. On the other hand, if the density is less than 0.005, the non-woven cloth becomes unstable in shape.

Further, when the fibers forming the non-woven cloth have an average diameter that is within a range from 0.1 µm to 200 µm, it is possible to realize the desired effects and stabilize the shape of the porous layer while suppressing increase in weight. It the average diameter is less than 0.1 µm, the fibers tend to be frequently broken during production of the fibers, thereby degrading the productivity of the fibers. On the other hand, if the average diameter exceeds 200 µm, the weight per unit area of the non-woven cloth becomes excessive, making it difficult to achieve an improved noise reduction effect notwithstanding the increased weight.

In the above-described pneumatic tire, when the impregnation layer extends between the porous layer and the tire inner surface, over the entire width of the porous layer, it is possible to further improve the fixation strength of the porous layer to the tire inner surface. Thus, according to the present invention, the impregnation layer may have a width that is larger than the total width of the porous layer.

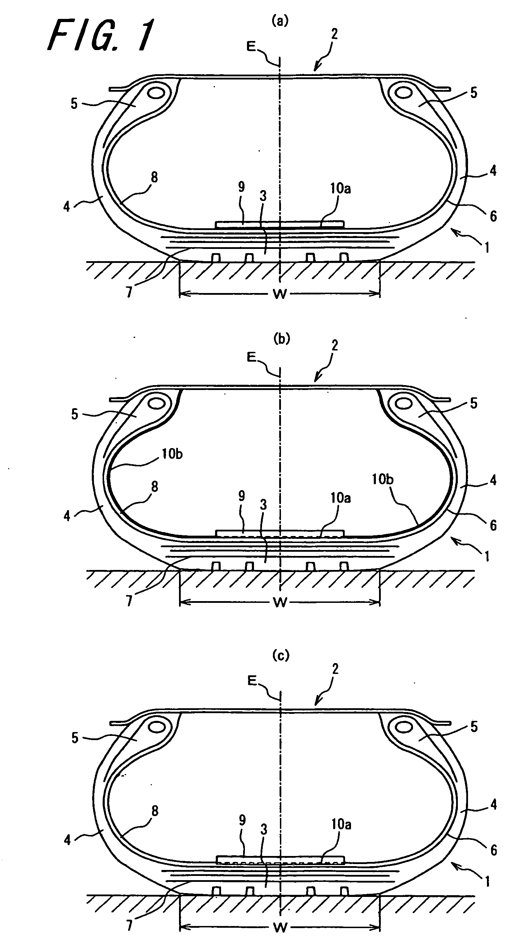

When the impregnation layer comprises a thermoplastic resin and extends over the entire sectional region in the tire inner surface, as exemplified by the widthwise-sectional view of the tire illustrated in FIG 1(b), the material of the impregnation layer may be used as a releasing agent upon vulcanization of the green tire. This is highly advantageous in terms of production technology, since an advance application of a releasing agent to the vulcanizing bladder and/or the inner surface of the green tire prior to its vulcanization is no longer necessary.

Depending upon the compatibility between suitably selected materials for the impregnation layer and the tire inner surface, the impregnation layer may be joined to the tire inner surface with, or without a permanently existing adhesive layer therebetween. Thus, the material for the impregnation layer may have desired properties independently from the material for the tire inner surface.

In the present invention, to the extent that the impregnation layer has desired properties and achieves a sufficiently firm adhesion of the porous layer to the tire inner surface, the impregnation layer may be partly or entirely impregnated in the porous layer depending upon their melting temperature, initial thickness, etc.

When the impregnation layer comprises a rubber of the same type as the inner liner rubber, the porous layer can be sufficiently firmly adhered to the inner liner on the tire inner surface without requiring an adhesive layer. On the other hand, when the impregnation layer comprises a thermoplastic resin, it is possible to afford the desired mechanical strength or other properties to the impregnation layer regardless of whether the inner liner comprises a thermoplastic resin of the same type. Furthermore, also when the inner liner rubber forming the tire inner surface constitutes the impregnation layer by itself, the porous layer can be sufficiently firmly adhered to the tire inner surface.

When the porous layer comprises a foamed body and the impregnation layer is impregnated in the foamed body with an impregnation depth that is within a range from 20 µm to 5 mm, the porous layer can be sufficiently firmly attached without substantial increase in mass. On the other hand, when the porous layer comprises a non-woven cloth, and the impregnation layer is preferably impregnated in the non-woven cloth with an impregnation depth exceeding an average diameter of fibers of the non-woven cloth, but not more than 5 mm. If the impregnation depth is below this range, restraint of the porous layer due to the attachment and/or physical engagement by the impregnation layer penetrating into the porous layer would be insufficient, making it difficult to achieve a sufficient fixation force between the porous layer and the tire inner surface. If, on the other hand, the impregnation depth exceeds this range, the weight would be significantly increased, though such increased weight is unnecessary from the viewpoint of preservation of the required fixation force.

The pneumatic tire constructed as described above may be produced by a process wherein the raw material for the impregnation layer is impregnated into the raw material for the porous layer, under heat and pressure to which a green tire is subjected during vulcanization thereof. In this instance, the pneumatic tire can be produced without addition of separate heating and pressing steps, which would be otherwise required for the purpose of impregnation. On such occasion, it would be advantageous from the production viewpoint to build the green tire by arranging the raw material for the impregnated layer on the inner surface of the green tire over the entire sectional region.

### BRIEF DESCRIPTION OF THE DRAWINGS

FIGS. 1(a) to 1(c) are widthwise-sectional views showing the pneumatic tire according to one embodiment of the present invention;
FIGS. 2(a) to 1(c) are explanatory views showing various examples of fixedly attaching the porous layer; and
FIG 3 is a graph showing the performance of the tire according to the present invention.

### (Reference Symbols)

- 1:: Pneumatic tire
- 2:: Rim
- 3:: Tread portion
- 8:: Inner liner
- 9:: Porous layer
- 10a:: impregnation layer
- 10b:: Thin layer portion
- 22:: Unvlucanized inner liner rubber
- 23:: Raw material for impregnation layer
- 24:: Raw material for porous layer
- W:: Ground-contact tread width
- E:: Tire equatorial plane

### BEST MODE FOR CARRYING OUT THE INVENTION

FIGS. 1(a) to 1(c) are widthwise-sectional views showing the rolling state of a pneumatic tire according to one embodiment of the present invention, wherein reference numeral 1 denotes the pneumatic tire as a whole, and reference numeral 2 denotes a rim on which the pneumatic tire 1 is assembled.

The pneumatic tire 1 includes a tread portion 3, a pair of sidewall portions 4 contiguous to the side edges of the tread portion 3, and bead portions 5 contiguous to the inner peripheral side of the relevant sidewall portions 4. These structural elements are reinforced by a carcass 6 toroidally extending between the both bead portions to form a skeleton of the tire. The tread portion 3 is further reinforced by belt layers 7 that is arranged on the outer peripheral side in the crown region of the carcass 6. In the drawings, furthermore, the symbol "W" denotes the ground-contact tread width, and the symbol "E" denotes the tire equatorial plane.

The pneumatic tire 1 illustrated herein further includes an inner liner 8 with an inner surface, which is fixedly attached a porous layer 9 extending across the tire equatorial plane E, through an impregnation layer 10a that is impregnated in the porous layer 9. The porous layer 9 may extend continuously over the entire circumference of the tire. Alternatively, the porous layer 9 may be divided into segments that are spaced from each other in the circumferential direction. The impregnation layer 10a is illustrated in the drawings as assuming a state in which it is impregnated into the porous layer 9 over the entire thickness of the raw material for the impregnation layer.

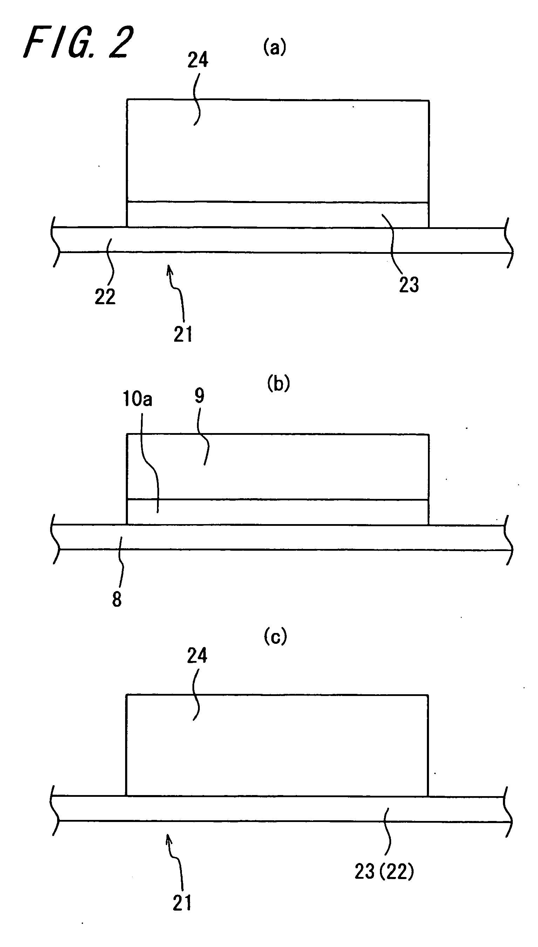

Such a fixed state of the porous layer 9 can be achieved by a process illustrated by the sectional view of FIG 2(a), by way of example. According to this process, first of all, a raw material for the impregnation layer 23 is positioned and arranged on the inner surface of the unvulcanized inner liner rubber 22 of a green tire 21, over the entire circumference of the unvulcanized inner liner rubber 22, optionally with an adhesive or glue for temporary fixation. Then, a raw material 24 for the porous layer is attached to the inner surface of the raw material for the impregnation layer 23, over the entire circumference, for example, in may cases with, but optionally without, an adhesive or glue for temporary fixation, to have a width that is substantially same as, or smaller than the width of the raw material for the impregnation layer 23. Thereafter, the green tire 21 is subjected to vulcanization so that the raw material 24 for the porous layer and the raw material for the impregnation layer 23 are urged toward the unvulcanized inner liner rubber 22 by a vulcanizing bladder that is inserted into inside of the green tire 21, and heated to the temperature of the green tire 21. As a result, depending upon the physical properties of the raw material 24 for the porous layer, etc., the porous layer 9 is fixedly attached to the inner liner 8 through the impregnation layer 10a, which has been impregnated in the porous layer 9 with its volume or bulk decreased by the pressure of the bladder, for example.

In this instance, if the impregnation layer 10a itself can be fixedly attached to the inner liner 8, the impregnation layer is joined to the inner liner 8 without an adhesive. The porous layer 9, in turn, is softened by the heat and brought into physical engagement with the impregnation layer 10a and/or fixedly attached to the impregnation layer 10a, so that the porous layer 9 is sufficiently firmly fixed to the inner liner 8.

On the other hand, if the impregnation layer 10a itself cannot be fixedly attached to the inner liner 8, the impregnation layer is joined to the inner liner 8 indirectly, through a permanent adhesive (not shown). In this instance also, the porous layer 9 and the impregnation layer 10a are physically engaged and/or fixedly attached in the manner described above.

As shown in the sectional view of FIG. 2(c), by way of example, the raw material 23 for the impregnation layer may be comprised of the unvulcanized rubber which forms the inner liner of the tire. In this instance also, as shown in FIG 1(c), the porous layer 9 is sufficiently firmly fixed to the inner surface of the tire through the inner liner 8 that is impregnated into the porous layer 9.

Here, as shown in FIGS. 1(a) to 1(c), it is preferred that the porous layer 9 is fixedly attached to the inner liner 8 over the entire circumference, with a width centered at the tire equatorial plane E and corresponding to 30-100% of the ground-contact tread width. It is further preferred that the porous layer 9 which has been firmly attached in place includes a non-impregnated portion, i.e., the portion which is free from penetration of the impregnation layer 10a, having a thickness within a range of 0.5-50 mm.

Incidentally, the porous layer 9 may be comprised of a foamed body of rubber or synthetic resin, having a continuous or independent pore structure, or of a non-woven cloth made of synthetic fibers, vegetable fibers or animal fibers. The porous layer 9 comprised of a non-woven cloth is advantageous in that, as compared to the foamed body, it is possible to minimize the reduction in volume and, hence, in thickness due to the pressure from the vulcanizing bladder upon vulcanization of the green tire.

When the porous layer 9 is comprised of a non-woven cloth, the non-woven cloth in the product tire preferably includes a portion free from penetration of the impregnation layer 10a, having a density within a range of 0.002-0.2.

Alternatively, or additionally, the non-woven cloth preferably has an average diameter of the fibers, which is within a range of 0.1-200 um.

On the other hand, the impregnation layer may be impregnated into the porous layer 9 over part of its thickness. In other words, in the fixedly attached state of the porous layer 9, the impregnation layer itself may have its own thickness. Regardless of whether the impregnation layer is impregnated into the porous layer 9 over part of its thickness, or it is impregnated into the porous layer 9 over the entire thickness, an adhesive layer may be interposed on the inner liner 8 so as to secure a higher fixation force.

Furthermore, the impregnation layer itself may be comprised of various rubbers or suitable thermoplastic resins described above, having such properties that the raw material 23 for the impregnated layer is sufficiently softened under the vulcanizing temperature (120°C to 190°C) of the green tire, and can be sufficiently penetrated into the raw material 24 for the porous layer.

As shown in the widthwise sectional view of FIG. 1 (b), the impregnation layer in the widthwise section may be arranged over the entirety of the inner surface of the inner liner 8. In this instance, as described above with reference to FIG 1 (a), the impregnation layer includes, in addition to a portion 10a that is penetrated into the inner liner 8 over its entire thickness, a thin-layer portion 10b that is lined to the inner liner 8. In this instance, the thin-layer portion 10b can be used as a releasing agent, thereby eliminating releasing step with respect to the vulcanizing bladder and the inner liner of the green tire upon vulcanization of the green tire, as described above.

Furthermore, in order to fully secure the gas barrier property in the inner liner 8 of the product tire, the inner liner rubber 22 is preferably afforded with an additional thickness exceeding the value with which the inner liner rubber 22 is impregnated into the porous layer.

### (Examples)

Pneumatic tires with a size of 215/45R17 were produced through vulcanization. On this occasion, the raw material 23 for the impregnation layer in the form of a laminated film with a thickness of approximately 100 µm, including a thermoplastic urethane-based elastomer, was arranged on the inner surface of an unvlucanized inner liner rubber 22 over the entire circumference. Then, the raw material 24 for the porous layer in the form of a non-woven cloth comprising polyethylene terephthalate fibers was arranged on the raw material 23 for the impregnation layer over the entire circumference, to have a width of 100 mm, which is approximately 60% of the ground-contact tread width. The green tire so built was subjected to vulcanization at the temperature of approximately 180°C, under the pressure of approximately 2 MPa, and for the duration of 17 minutes, to obtain a pneumatic tire (example tire 1) including the combination of the impregnation layer and the non-woven cloth. In the pneumatic tire so produced, the impregnation layer is impregnated into the non-woven cloth with an impregnation depth of approximately 60 µm, the non-impregnated portion of the non-woven cloth has a thickness of approximately 2 mm, the density is approximately 0.02, and the average diameter of the fibers is approximately 12 µm.

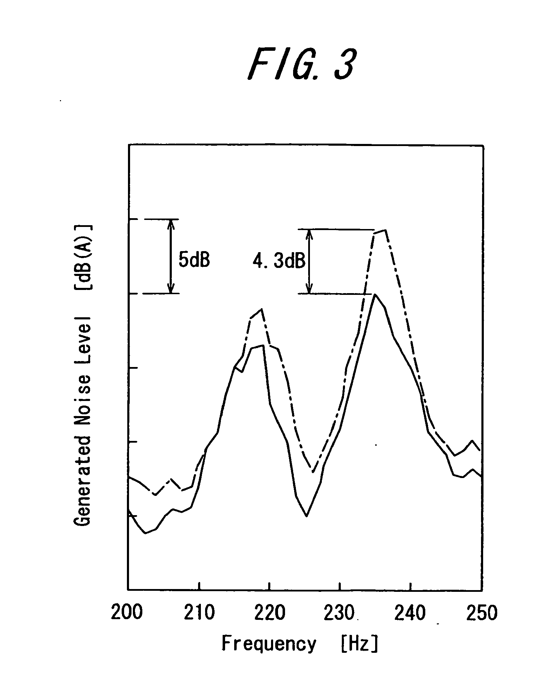

The example tire 1 was assembled to a rim of the size 17x7JJ, and inflated with air pressure of 210 kPa, before it was subjected to an actual running test on asphalt road, under a load of 3.92 kN and at the speed of 60 km/h. During the actual running test, the cabin noise at the front driver's seat was measured to obtain the results as shown in the graph of FIG. 3 with a solid line. A peak value can be observed at the frequency around 235 kHz, which represents the cavity resonance noise.

Similarly, noise measurement was conducted under the same test conditions with respect to a comparative tire 1 of the same size, which is not attached with the porous layer 9, to obtain the results as shown in the graph of FIG 3 with a dotted line. It is appreciated from the graph of FIG. 3 that the example tire 1 serves to reduce the cavity resonance noise by 4.3 dB, as compared to the comparative tire 1.

Furthermore, durability drum test was conducted with respect to the example tires and comparative tires, under the conditions of the high speed performance test A (based on Passenger Car Tire Safety Standards [Quality Standards Section]), in order to ascertain the fixed state of the porous layer to the tire inner surface after the durability drum test. On this occasion, in addition to the example tire 1, there was prepared an example tire 2 in the form of a pneumatic tire wherein the porous layer comprises a silicone-based spongy material and has the same size, the same impregnation layer is arranged over the entire circumference to have the same width, the impregnated depth into the porous layer is approximately 60 µm, the thickness of the non-impregnated portion is approximately 4 mm, and the density is approximately 0.20. There were further prepared an example tire 3 in the form of a pneumatic tire wherein the non-woven cloth in the example tire 1 is directly impregnated with the inner liner rubber under the same conditions as the example tire 1, as well as a comparative tire 2 wherein the same non-woven cloth as used in the example tire 1 is attached to the tire inner surface by a double stick tape (acrylic adhesive). The results of the durability drum test are shown in Table 1 below.

**Table 1**

| Test Tires | Test Step Numbers in Durability Drum Test under High Speed Performance Test Conditions A | Evaluation | Fixed State of the Porous Layer |
|---|---|---|---|
| Comparative Tire 1 | 22 steps | Acceptable | - - - |
| Comparative Tire 2 | 21 steps | Acceptable | Partial separation |
| Example Tire 1 | 21 steps | Acceptable | No separation |
| Example Tire 2 | 22 steps | Acceptable | No separation |
| Example Tire 3 | 21 steps | Acceptable | No separation |

It is clear from Table 1 that the durability is not essentially degraded by the example tires. Moreover, it was confirmed that all the failures in the comparative tires and example tires are separation at the belt edges, and the fixation strength of the porous layer to the tire inner surface in the example tires remains fully secured.

## Claims

1. A pneumatic tire comprising a porous layer (9) that is fixedly attached to a tire inner surface through an impregnation layer (10a) said impregnation layer being impregnated in the porous layer over part of a thickness of the porous layer.

2. The pneumatic tire according to claim 1, wherein said porous layer is fixedly attached to the tire inner surface over a width across a tire equatorial plane, said width corresponding to 30% to 100% of a ground-contact width of the tread.

3. The pneumatic tire according to claim 1 or 2, wherein said impregnation layer is interposed between the porous layer and the tire inner surface over an entire width of the porous layer.

4. The pneumatic tire according to any one of claims 1 to 3, wherein said impregnation layer is joined to the tire inner surface optionally with an adhesive layer interposed therebetween.

5. The pneumatic tire according to any one of claims 1 to 4, wherein said impregnation layer is at least partly impregnated in said porous layer.

6. The pneumatic tire according to any one of claims 1 to 5, wherein said impregnation layer comprises a rubber or a thermoplastic resin.

7. The pneumatic tire according to any one of claims 1 to 6, wherein said impregnation layer is comprised of the same rubber that forms the tire inner liner.

8. The pneumatic tire according to any one of claims 1 to 7, wherein said porous layer has a non-impregnated portion with a thickness within a range of 0.5 mm to 50 mm.

9. The pneumatic tire according to any one of claims 1 to 8, wherein said porous layer comprises a foamed body, and said impregnation layer is impregnated in the foamed body with an impregnation depth that is within a range of 20 µm to 5 mm.

10. The pneumatic tire according to any one of claims 1 to 8, wherein said porous layer comprises a non-woven cloth, and said impregnation layer is impregnated in the non-woven cloth with an impregnation depth that exceeds an average diameter of fibers of the non-woven cloth.

11. The pneumatic tire according to claim 10, wherein said non-woven cloth has a non-impregnated portion with a density that is within a range of 0.005 to 0.2.

12. The pneumatic tire according to claim 10 or 11, wherein said fibers forming the non-woven cloth have an average diameter that is within a range of 0.1 µm to 200 µm.

13. A method of producing a pneumatic tire, wherein a raw material (23) for an impregnation layer is impregnated into a raw material (24) for a porous layer, and a resultant porous layer is fixedly attached to a tire inner surface, under heat and pressure to which a green tire is subjected during a vulcanizing process.

## Patentansprüche

1. Luftreifen, der eine poröse Schicht (9) aufweist, die fest an einer Reifeninnenfläche mittels einer Imprägnierungsschicht (10a) angebracht ist, wobei die Imprägnierungsschicht in die poröse Schicht über einen Teil einer Dicke der porösen Schicht imprägniert ist.

2. Luftreifen nach Anspruch 1, bei dem die poröse Schicht fest an der Reifeninnenfläche über eine Breite über eine Reifenäquatorebene angebracht ist, wobei die Breite 30 % bis 100 % einer Reifenaufstandsbreite der Lauffläche entspricht.

3. Luftreifen nach Anspruch 1 oder 2, bei dem die Imprägnierungsschicht zwischen der porösen Schicht und der Reifeninnenfläche über eine gesamte Breite der porösen Schicht angeordnet ist.

4. Luftreifen nach einem der Ansprüche 1 bis 3, bei dem die Imprägnierungsschicht mit der Reifeninnenfläche wahlweise mit einer dazwischen angeordneten adhäsiven Schicht verbunden ist.

5. Luftreifen nach einem der Ansprüche 1 bis 4, bei dem die Imprägnierungsschicht mindestens teilweise in der porösen Schicht imprägniert ist.

6. Luftreifen nach einem der Ansprüche 1 bis 5, bei dem die Imprägnierungsschicht einen Gummi oder ein thermoplastisches Harz aufweist.

7. Luftreifen nach einem der Ansprüche 1 bis 6, bei dem die Imprägnierungsschicht den gleichen Gummi aufweist, der den Innerliner des Reifens bildet.

8. Luftreifen nach einem der Ansprüche 1 bis 7, bei dem die poröse Schicht einen nichtimprägnierten Abschnitt mit einer Dicke innerhalb eines Bereiches von 0,5 mm bis 50 mm aufweist.

9. Luftreifen nach einem der Ansprüche 1 bis 8, bei dem die poröse Schicht einen Schaumkörper aufweist, und bei dem die Imprägnierungsschicht im Schaumkörper mit einer Imprägniertiefe imprägniert ist, die innerhalb eines Bereiches von 20 µm bis 5 mm liegt.

10. Luftreifen nach einem der Ansprüche 1 bis 8, bei dem die poröse Schicht einen Vliesstoff aufweist, und bei dem die Imprägnierungsschicht im Vliesstoff mit einer Imprägniertiefe imprägniert ist, die einen mittleren Durchmesser der Fasern des Vliesstoffes übersteigt.

11. Luftreifen nach Anspruch 10, bei dem der Vliesstoff einen nichtimprägnierten Abschnitt mit einer Dichte aufweist, die innerhalb eines Bereiches von 0,005 bis 0,2 liegt.

12. Luftreifen nach Anspruch 10 oder 11, bei dem die Fasern, die den Vliesstoff bilden, einen mittleren Durchmesser aufweisen, der innerhalb eines Bereiches von 0,1 µm bis 200 µm liegt.

13. Verfahren zur Herstellung eines Luftreifens, bei dem ein Rohstoff (23) für eine Imprägnierungsschicht in einen Rohstoff (24) für eine poröse Schicht imprägniert wird, und bei dem die resultierende poröse Schicht an einer Reifeninnenfläche unter Wärme und Druck fest angebracht wird, denen ein Reifenrohling während eines Vulkanisiervorganges unterworfen wird.

## Revendications

1. Bandage pneumatique, comprenant une couche poreuse (9) fixée fermement sur la surface interne d'un bandage pneumatique, à travers une couche d'imprégnation (10a), ladite couche d'imprégnation étant imprégnée dans la couche poreuse sur une partie d'une épaisseur de la couche poreuse.

2. Bandage pneumatique selon la revendication 1, dans lequel ladite couche poreuse est fermement fixée sur la surface interne du bandage pneumatique, sur une largeur à travers un plan équatorial du bandage pneumatique, ladite largeur représentant 30% à 100% d'une largeur de contact au sol de la bande de roulement.

3. Bandage pneumatique selon les revendications 1 ou 2, dans lequel ladite couche d'imprégnation est agencée entre la couche poreuse et la surface interne du bandage pneumatique, sur l'ensemble de la largeur de la couche poreuse.

4. Bandage pneumatique selon l'une quelconque des revendications 1 à 3, dans lequel ladite couche d'imprégnation est reliée à la surface interne du bandage pneumatique, une couche adhésive étant optionnellement agencée entre elles.

5. Bandage pneumatique selon l'une quelconque des revendications 1 à 4, dans lequel ladite couche d'imprégnation est au moins partiellement imprégnée dans ladite couche poreuse.

6. Bandage pneumatique selon l'une quelconque des revendications 1 à 5, dans lequel ladite couche d'imprégnation comprend un caoutchouc ou une résine thermoplastique.

7. Bandage pneumatique selon l'une quelconque des revendications 1 à 6, dans lequel ladite couche d'imprégnation est composée d'un caoutchouc identique à celui composant le calandrage intérieur du bandage pneumatique.

8. Bandage pneumatique selon l'une quelconque des revendications 1 à 7, dans lequel ladite couche poreuse comporte une partie non imprégnée, ayant une épaisseur comprise dans un intervalle allant de 0,5 mm à 50 mm.

9. Bandage pneumatique selon l'une quelconque des revendications 1 à 8, dans lequel ladite couche poreuse comprend un corps en mousse, ladite couche d'imprégnation étant imprégnée dans le corps en mousse, avec une profondeur d'imprégnation comprise dans un intervalle allant de 20 µm à 5 mm.

10. Bandage pneumatique selon l'une quelconque des revendications 1 à 8, dans lequel ladite couche poreuse comprend un tissu non tissé, ladite couche d'imprégnation étant imprégnée dans le tissu non tissé, avec une profondeur d'imprégnation dépassant un diamètre moyen des fibres du tissu non tissé.

11. Bandage pneumatique selon la revendication 10, dans lequel ledit tissu non tissé comporte une partie non imprégnée ayant une densité comprise dans un intervalle allant de 0,005 à 0,2.

12. Bandage pneumatique selon les revendications 10 ou 11, dans lequel lesdites fibres formant le tissu non tissé ont un diamètre moyen compris dans un intervalle allant de 0,1 µm à 200 µm.

13. Procédé de production d'un bandage pneumatique, dans lequel un matériau brut (23) pour une couche d'imprégnation est imprégné dans un matériau brut (24) pour une couche poreuse, une couche poreuse résultante étant fermement fixée sur la surface interne d'un bandage pneumatique, en présence de chaleur et de pression auxquelles un bandage pneumatique cru est exposé au cours d'un processus de vulcanisation.
